# EUROPEAN PATENT APPLICATION

(11) **EP 4 183 828 A1**
(43) Date of publication of application: **24.05.2023**
(21) Application number: 21841661.8
(22) Date of filing: 06.07.2021
(51) Int. Cl.: C08K 5/14, C08L 67/02, C08L 67/04, C08L 101/16

(54) **ALIPHATIC-POLYESTER-BASED RESIN COMPOSITION AND UTILIZATION THEREOF**

(30) Priority: 17.07.2020 JP 2020123254
(71) Applicant: Kaneka Corporation, Osaka-shi, Osaka 530-8288 (JP)
(72) Inventor: HASHIGUCHI, Tomoaki, Settsu-shi, Osaka 566-0072 (JP)
(74) Representative: Vossius & Partner Patentanwälte Rechtsanwälte mbB
(86) International application number: PCT/JP2021/025447
(87) International publication number: WO 2022/014408

(57) **Abstract**

The present invention has an object to provide (i) an aliphatic polyester-based resin composition that is biodegradable and has excellent shock resistance. The object is attained by providing an aliphatic polyester-based resin composition containing (A) poly(3-hydroxyalkanoate) and (B) a compatibilized biodegradable resin containing a reaction product of (i) the poly(3-hydroxyalkanoate), (ii) a biodegradable resin other than the poly(3-hydroxyalkanoate) and having a glass transition temperature of not more than -10°C, and (iii) a peroxide, the (B) having a dispersed particle diameter of 0.1 pm to 1.5 µm.

## Description

### Technical Field

The present invention relates to (i) an aliphatic polyester-based resin composition containing poly(3-hydroxyalkanoate) (hereinafter may be referred to as "P3HA" or a " P3HA-based resin") and (ii) a use of the aliphatic polyester-based resin composition.

### Background Art

In recent years, environmental issues caused by plastic waste have been focused on. In particular, marine contamination caused by plastic waste is serious. It is therefore expected that biodegradable plastic which is degraded in a natural environment will be widespread.

Various types of such biodegradable plastic are known. Among those types of biodegradable plastic, P3HA is a thermoplastic polyester that is produced and accumulated as an energy storage substance in cells of many microorganism species. P3HA is a material that can undergo biodegradation not only in soil but also in seawater. Thus, P3HA has attracted attention as a material for solving the above-described problems. However, P3HA has a problem such as poor anti-shock strength.

As a technique for solving such a problem, for example, Patent Literature 1 discloses, for example, a resin composition containing a P3HA-based resin and a graft polymer.

Patent Literature 2 discloses, for example, a resin composition containing a P3HA-based resin and a biodegradable resin other than the P3HA-based resin, such as polybutylene adipate terephthalate, polybutylene succinate adipate, polybutylene succinate, or polycaprolactone.

### Citation List

### [Patent Literatures]

[Patent Literature 1]
   Japanese Patent No. 6291472
[Patent Literature 2]
   International Publication No. WO 2010/013483

### Summary of Invention

### Technical Problem

The techniques disclosed in Patent Literatures 1 and 2 have room for improvement in terms of shock resistance.

In view of the above, the present invention has an object to provide (i) (a) an aliphatic polyester-based resin composition that is biodegradable and has excellent shock resistance and (b) a molded product of the aliphatic polyester-based resin composition, and (ii) a method for producing the aliphatic polyester-based resin composition.

### Solution to Problem

The inventors of the present invention intensively studied in order to solve the above problems. As a result, for the first time, the inventors found the following. Specifically, some of P3HA contained in an aliphatic polyester-based resin composition is preliminarily mixed (for example, melted and kneaded) with (i) a specific biodegradable resin other than the P3HA and (ii) a peroxide, and a resulting mixture is subjected to reaction, so that a compatibilized biodegradable resin containing a reaction product is obtained. Then, the obtained compatibilized biodegradable resin is mixed (for example, melted and kneaded) with the rest of the P3HA, so that the aliphatic polyester-based resin composition which is biodegradable and has excellent shock resistance is obtained. The inventors thus finally completed the present invention.

Thus, an aspect of the present invention is an aliphatic polyester-based resin composition containing the following (A) and (B): (A) poly(3-hydroxyalkanoate); and (B) a compatibilized biodegradable resin containing a reaction product of (i) the poly(3-hydroxyalkanoate), (ii) a biodegradable resin other than the poly(3-hydroxyalkanoate) and having a glass transition temperature of not more than -10°C, and (iii) a peroxide, the (B) having a dispersed particle diameter of 0.1 µm to 1.5 µm in the aliphatic polyester-based resin composition.

Furthermore, an aspect of the present invention is a method for producing an aliphatic polyester-based resin composition, including the steps of: (a) melting and kneading (i) poly(3-hydroxyalkanoate), (ii) a biodegradable resin other than the poly(3-hydroxyalkanoate) and having a glass transition temperature of not more than -10°C, and (iii) a peroxide so as to obtain a compatibilized biodegradable resin; and (b) melting and kneading the compatibilized biodegradable resin obtained in the step (a) and the poly(3-hydroxyalkanoate) so as to obtain the aliphatic polyester-based resin composition.

### Advantageous Effects of Invention

An aspect of the present invention makes it possible to provide (i) (a) an aliphatic polyester-based resin composition that is biodegradable and has excellent shock resistance and (b) a molded product of the aliphatic polyester-based resin composition, and (ii) a method for producing the aliphatic polyester-based resin composition.

### Brief Description of Drawings

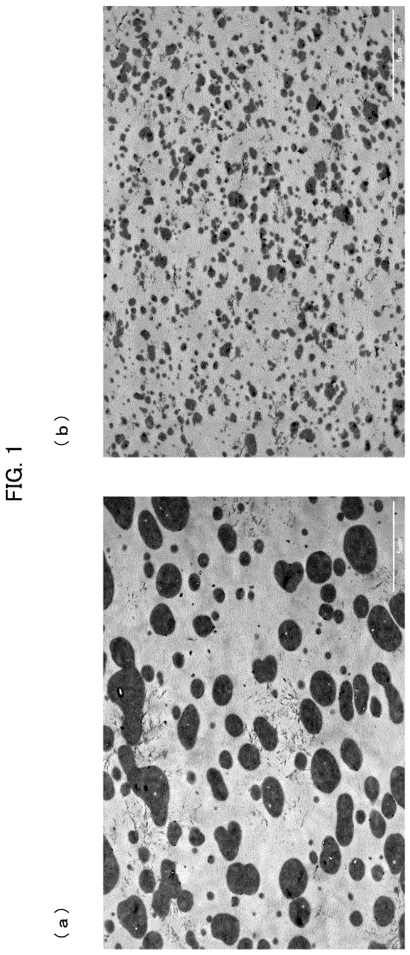

Fig. 1 is a diagram showing images obtained in Examples (Fig. 1 (b)) and Comparative Examples (Fig. 1 (a)) by using a transmission electron microscope to observe a cross section of a molded product (test piece).

### Description of Embodiments

An embodiment of the present invention will be detailed below. Any numerical range expressed as "A to B" means "not less than A and not more than B" (i.e., a range from A to B which includes both A and B)" unless otherwise stated herein. All documents cited in this specification are also incorporated herein by reference.

### [1. Summary of the present invention]

An aliphatic polyester-based resin composition in accordance with an embodiment of the present invention (hereinafter referred to as "the present aliphatic polyester-based resin composition") is an aliphatic polyester-based resin composition containing the following (A) and (B): (A) poly(3-hydroxyalkanoate); and (B) a compatibilized biodegradable resin containing a reaction product of (i) the poly(3-hydroxyalkanoate), (ii) a biodegradable resin other than the poly(3-hydroxyalkanoate) and having a glass transition temperature of not more than -10°C, and (iii) a peroxide, the (B) having a dispersed particle diameter of 0.1 µm to 1.5 pm in the aliphatic polyester-based resin composition.

It is known that P3HA has, for example, the following problems: (1) a problem of having poor anti-shock strength; (2) a problem of having lower processability and productivity during molding processing due to its very slow crystallization; and (3) a problem of tending to be brittle over time after molding processing.

In order to impart flexibility to P3HA, a plasticizing agent is conventionally added. However, in some cases, a large amount of the plasticizing agent needs to be added. This causes a problem of, for example, bleedout of the plasticizing agent.

In response to such a problem, in order to improve low anti-shock strength and low molding processability, Patent Literature 1 discloses, for example, a resin composition containing a P3HA-based resin and a graft polymer.

In order to achieve excellent flexibility and improved molding processability while increasing a biomass level of a resin composition, Patent Literature 2 discloses, for example, a resin composition containing a P3HA-based resin and a biodegradable resin other than the P3HA-based resin, such as polybutylene adipate terephthalate, polybutylene succinate adipate, polybutylene succinate, or polycaprolactone.

However, these techniques are insufficient to impart sufficient anti-shock strength to a resin composition containing P3HA.

Under such circumstances, the inventors of the present invention found the following. Specifically, an aliphatic polyester-based resin composition that has excellent shock resistance is obtained by causing an aliphatic polyester-based resin composition containing P3HA to contain (i) a biodegradable resin other than the P3HA and having a glass transition temperature of not more than -10°C and (ii) a peroxide.

The aliphatic polyester-based resin composition described above is excellent, but has room for improvement from the viewpoint of shock resistance. Under the circumstances, in the course of further study, the inventors of the present invention found the following. Specifically, some of P3HA contained in an aliphatic polyester-based resin composition is preliminarily mixed (for example, melted and kneaded) with (i) a specific biodegradable resin (i.e., a biodegradable resin other than the P3HA and having a glass transition temperature of not more than -10°C) and (ii) a peroxide, and a resulting mixture is subjected to reaction, so that a compatibilized biodegradable resin containing a reaction product of (i) the P3HA, (ii) the biodegradable resin other than the P3HA and having a glass transition temperature of not more than -10°C, and (iii) the peroxide is obtained. Then, the obtained compatibilized biodegradable resin is melted and kneaded with the rest of the P3HA, so that an aliphatic polyester-based resin composition that has excellent shock resistance is obtained. During detailed study of the aliphatic polyester-based resin composition described above and containing P3HA and a compatibilized biodegradable resin (i.e., the present aliphatic polyester-based resin composition), the inventors of the present invention found the following. Specifically, as compared with a resin composition, which is a direct mixture of (i) P3HA, (ii) a biodegradable resin other than the P3HA and having a glass transition temperature of not more than -10°C, and (iii) a peroxide, the compatibilized biodegradable resin (i.e., the reaction product of (i) the P3HA, (ii) the biodegradable resin other than the P3HA and having a glass transition temperature of not more than -10°C, and (iii) the peroxide) contained in the present aliphatic polyester-based resin composition has a smaller dispersed particle diameter (Fig. 1). The inventors of the present invention speculate that the present aliphatic polyester-based resin composition has excellent shock resistance for the following reason. Some of P3HA is preliminarily mixed (for example, melted and kneaded) with (i) a biodegradable resin other than the P3HA and having a glass transition temperature not more than -10°C and (ii) a peroxide, a resulting mixture is subjected to reaction, so that a compatibilized biodegradable resin containing a reaction product of (i) the P3HA, (ii) the biodegradable resin other than the P3HA and having a glass transition temperature of not more than -10°C, and (iii) the peroxide is obtained. Then, the obtained compatibilized biodegradable resin is further mixed with the P3HA so that an aliphatic polyester-based resin composition is obtained. This allows the compatibilized biodegradable resin to be more finely dispersed in the obtained aliphatic polyester-based resin composition. This results in an increase in binding frequency between the P3HA and the biodegradable resin other than the P3HA and having a glass transition temperature of not more than -10°C, so that a molded product containing the aliphatic polyester-based resin composition has higher shock resistance. It should be noted that the present invention is not limited to such an action mechanism.

Therefore, the present invention is extremely useful in applications in various fields that require a resin composition and a molded product each of which is biodegradable and has shock resistance.

In addition, the configuration described above allows plastic waste to be produced in a smaller amount. This enables the present invention to contribute to achievement of sustainable development goals (SDGs) such as Goal 12 "Ensure sustainable consumption and production patterns" and Goal 14 "Conserve and sustainably use the oceans, seas and marine resources for sustainable development".

### [2. Aliphatic polyester-based resin composition]

### <Resin (A)>

A resin (A) is a resin containing P3HA. The resin (A) herein may be simply referred to as (A).

The present aliphatic polyester-based resin composition contains P3HA derived from the resin (A) and P3HA derived from a resin (B). That is, the resin (A) contains some of the total amount of P3HA contained in the present aliphatic polyester-based resin composition.

### (P3HA)

The "P3HA" herein means a generic term for a copolymer consisting of one or more types of units represented by the following formula (1):

[-O-CHR-CH₂-CO-] (1)

where R is an alkyl group represented by CₙH₂ₙ₊₁, and n is an integer of 1 to 15.
However, "P3HA" herein does not include P3HB and P3HB3HV.

P3HA is not particularly limited provided that the P3HA is included in the above formula (1).

In an embodiment of the present invention, the P3HA may be poly(3-hydroxybutyrate) having only 3-hydroxybutyrate as a repeating unit. Alternatively, the P3HA may be a copolymer of 3-hydroxybutyrate and another hydroxyalkanoate.

In an embodiment of the present invention, the P3HA may be (i) a homopolymer, (ii) a mixture of a homopolymer and one or more types of copolymers, or (iii) a mixture of two or more types of copolymers. A form of copolymerization is not particularly limited and may be, for example, random copolymerization, alternating copolymerization, block copolymerization, or graft copolymerization.

In an embodiment of the present invention, examples of the P3HA include poly(3-hydroxybutyrate) (P3HB), poly(3-hydroxybutyrate-co-3-hydroxypropionate) (P3HB3HP), poly(3-hydroxybutyrate-co-3-hydroxyhexanoate) (P3HB3HH), poly(3-hydroxybutyrate-co-3-hydroxyvalerate) (P3HB3HV), poly (3-hydroxybutyrate-co-4-hydroxybutyrate) (P3HB4HB), poly(3-hydroxybutyrate-co-3-hydroxyoctanoate) (P3HB3HO), poly(3-hydroxybutyrate-co-3-hydroxyoctadecanoate) (P3HB3HOD), poly(3-hydroxybutyrate-co-3-hydroxydecanoate) (P3HB3HD), and poly(3-hydroxybutyrate-co-3-hydroxyvalylate-co-3-hydroxyhexanoate) (P3HB3HV3HH). The P3HA is preferably P3HB3HH, P3HB4HB, or P3HB3HP because its melting point can be adjusted to be low and a wider processing range can be achieved. Among these, P3HB3HH or P3HB4HB is particularly preferable because P3HB3HH or P3HB4HB is industrially easily produced. In addition to the above, P3HB or P3HB3HV is also preferable from the viewpoint of industrial productivity.

In an embodiment of the present invention, it is preferable to remove "P3HB" and "P3HB3HV" from "P3HA".

The P3HA is preferably produced by a microorganism. A microorganism that produces the P3HA is not particularly limited provided that the microorganism is capable of producing the P3HA. For example, *Bacillus megaterium* was first discovered in 1925 as a P3HB3HH-producing bacterium. Other examples of the P3HB3HH-producing bacterium include natural microorganisms such as *Cupriavidus necator* (formerly classified as *Alcaligenes eutrophus), Ralstonia eutropha,* and *Alcaligenes latus.* It is known that P3HB3HH is accumulated in bacterial cells of these microorganisms.

Known examples of a bacterium producing a copolymer of hydroxybutyrate and another hydroxyalkanoate include *Aeromonas caviae,* which is a P3HB3HH-producing bacterium, and *Alcaligenes eutrophus,* which is a P3HB4HB-producing bacterium. In particular, regarding P3HB3HH, in order to increase productivity of P3HB3HH, for example, an *Alcaligenes eutrophus* AC32 strain (*Alcaligenes eutrophus* AC32, FERM BP-6038 (T. Fukui, Y. Doi, J. Bateriol., 179, p. 4821-4830 (1997)) into which genes of a group of P3HB3HH synthases have been introduced is more preferable. Microorganism bacterial cells obtained by culturing these microorganisms under appropriate conditions and accumulating P3HB3HH in bacterial cells of the microorganisms are used. Besides the above, in accordance with P3HA that is desired to be produced, a genetically modified microorganism into which various P3HA synthesis-related genes have been introduced may be used, and/or culture conditions including a type of substrate may be optimized.

P3HB3HH can also be produced by, for example, a method disclosed in International Publication No. WO 2010/013483. Examples of a commercially available product of P3HB3HH include "Kaneka Biodegradable Polymer PHBH (registered trademark)" available from KANEKA CORPORATION (for example, X131A and 151C that are used in Examples).

In an embodiment of the present invention, a composition ratio between copolymerization components of P3HB3HH (3-hydroxybutyrate) / (3-hydroxyhexanoate) is preferably 99/1 (mol/mol) to 80/20 (mol/mol), and more preferably 97/3 (mol/mol) to 75/ 15 (mol/mol). In a case where the composition ratio between the copolymerization components of P3HB3HH is in the above range, the aliphatic polyester-based resin composition has effective physical properties.

In an embodiment of the present invention, the P3HA has a weight average molecular weight (hereinafter may be referred to as "Mw") that is not particularly limited. From the viewpoint of molding processability, the P3HA has a weight average molecular weight of preferably 50,000 to 3,000,000, more preferably 100,000 to 2,500,000, and even more preferably 150,000 to 2,000,000. The P3HA that has a weight average molecular weight of less than 50,000 may have insufficient mechanical properties such as strength. The P3HA that has a weight average molecular weight of more than 3,000,000 may have poor molding processability.

A method for measuring the weight average molecular weight of the P3HA is not particularly limited. Note, however, that the weight average molecular weight of the P3HA can be determined as a polystyrene-equivalent weight average molecular weight by, for example, using chloroform as a mobile phase, using a GPC system (manufactured by Waters Corporation) as a system, and using Shodex K-804 (polystyrene gel, manufactured by Showa Denko K.K.) as a column.

In an embodiment of the present invention, the P3HA that is derived from the resin (A) is contained in an amount of preferably 95 parts by weight to 50 parts by weight, more preferably 94 parts by weight to 52 parts by weight, even more preferably 93 parts by weight to 55 parts by weight, and particularly preferably 91 parts by weight to 58 parts by weight, with respect to 100 parts by weight of the present aliphatic polyester-based resin composition. The present aliphatic polyester-based resin composition that contains the P3HA of the resin (A) in an amount of not more than 95 parts by weight tends to easily exhibit an effect of shock resistance in a case where the resin (B) is added thereto. The present aliphatic polyester-based resin composition that contains the P3HA of the resin (A) in an amount of not less than 50 parts by weight tends to maintain an appropriate elastic modulus and to be suitable to be actually used as a molded product.

### <Resin (B)>

The resin (B) is a compatibilized biodegradable resin that contains a reaction product of (i) the P3HA, (ii) the biodegradable resin other than the P3HA and having a glass transition temperature of not more than -10°C, and (iii) the peroxide. The resin (B) contains some of the total amount of P3HA contained in the present aliphatic polyester-based resin composition (i.e., P3HA other than the P3HA derived from the resin (A)). The resin (B) herein may be simply referred to as (B). In addition, "the reaction product of (i) the P3HA, (ii) the biodegradable resin other than the P3HA and having a glass transition temperature of not more than -10°C, and (iii) the peroxide" herein may be simply referred to as a "reaction product".

The reaction product that is contained in the resin (B) can also be said to be a reaction product made of (i) the P3HA, (ii) the biodegradable resin other than the P3HA and having a glass transition temperature of not more than -10°C, and (iii) the peroxide. The reaction product may be, for example, a reaction product in which the biodegradable resin other than the P3HA and having a glass transition temperature of not more than -10°C is grafted to the P3HA.

The resin (B) can be said to be a compatibilized biodegradable resin containing a reaction product obtained by mixing and reacting (i) the P3HA, (ii) the biodegradable resin other than the P3HA and having a glass transition temperature of not more than -10°C, and (iii) the peroxide. The resin (B) is preferably a compatibilized biodegradable resin containing a reaction product obtained by melting and kneading and reacting (i) the P3HA, (ii) the biodegradable resin other than the P3HA and having a glass transition temperature of not more than -10°C, and (iii) the peroxide. The term "melting and kneading" herein means that materials having different properties are mixed while being melted. A melting and kneading method is not particularly limited, and any method that is known in the technical field to which the present invention pertains can be used.

Furthermore, the resin (B) may contain not only the reaction product but also unreacted P3HA, a biodegradable resin other than the P3HA and having a glass transition temperature of not more than -10°C, and/or a peroxide. Specifically, the resin (B) may be a compatibilized biodegradable resin containing not only the reaction product but also unreacted P3HA, a biodegradable resin other than the P3HA and having a glass transition temperature of not more than -10°C, and/or a peroxide.

In an embodiment of the present invention, the resin (B) is contained in an amount of preferably 5 parts by weight to 50 parts by weight, more preferably 6 parts by weight to 48 parts by weight, even more preferably 7 parts by weight to 45 parts by weight, and particularly preferably 9 parts by weight to 42 parts by weight, with respect to 100 parts by weight of the present aliphatic polyester-based resin composition. The present aliphatic polyester-based resin composition that contains the resin (B) in an amount in the above range brings about an effect of making it possible to provide a molded product that exhibits high shock resistance while having an appropriate elastic modulus as the molded product.

### (P3HA)

As the P3HA of which is the reaction product contained in the resin (B) is made, the P3HA described in (P3HA) of <Resin (A)> above is employed.

In an embodiment of the present invention, a type of the P3HA of which the reaction product contained in the resin (B) is made may be identical to or different from that of the P3HA contained in the resin (A). For example, as shown in Examples described later, a single compound (i.e., PHBH) may be used for the P3HA contained in the resin (A) and the P3HA contained in the resin (B).

In an embodiment of the present invention, the P3HA of the resin (B) is contained in an amount of preferably 1 part by weight to 40 parts by weight, more preferably 2 parts by weight to 38 parts by weight, even more preferably 3 parts by weight to 37 parts by weight, and particularly preferably 4 parts by weight to 35 parts by weight, with respect to 100 parts by weight of the present aliphatic polyester-based resin composition. In a case where the P3HA of the resin (B) is contained in an amount in the above range and the P3HA reacts with (i) the biodegradable resin other than the P3HA and (ii) the peroxide, the biodegradable resin other than the P3HA is effectively grafted to the P3HA. Note that the amount of the P3HA contained means a used amount (blended amount) of the P3HA.

### (Biodegradable resin other than P3HA and having glass transition temperature of not more than -10°C)

In an embodiment of the present invention, the biodegradable resin, which is other than the P3HA and of which the reaction product is made, is not particularly limited provided that the biodegradable resin is a biodegradable resin other than the P3HA and having a glass transition temperature of not more than -10°C. In an embodiment of the present invention, the glass transition temperature is not more than - 10°C, preferably not more than -15°C, and more preferably not more than -20°C. Use of the biodegradable resin other than the P3HA and having a glass transition temperature of not more than -10°C makes it possible to bring about an effect of the present invention. The glass transition temperature of the biodegradable resin other than the P3HA has a lower limit that is not particularly limited and can be, for example, not less than -100°C. The term "biodegradable resin" means a resin having a property of being degraded, up to a molecular level by action of a microorganism, eventually into carbon dioxide and water.

Examples of the biodegradable resin other than the P3HA and having a glass transition temperature of not more than - 10°C include polybutylene adipate terephthalate (hereinafter may be referred to as "PBAT"), polybutylene succinate adipate (hereinafter may be referred to as "PBSA"), polybutylene succinate (hereinafter may be referred to as "PBS"), polybutylene succinate terephthalate (hereinafter may be referred to as "PBST"), polybutylene succinate adipate terephthalate (hereinafter may be referred to as "PBSAT"), polybutylene sebacate terephthalate (hereinafter may be referred to as "PBSeT"), polybutylene azelate terephthalate (hereinafter may be referred to as "PBAzT"), and polycaprolactone (hereinafter may be referred to as "PCL").

The "PBAT" herein means a random copolymer of 1,4-butanediol, adipic acid, and terephthalic acid. In particular, PBAT is preferable that is obtained by reacting (a) a mixture consisting mainly of (i) 35 mol% to 95 mol% of adipic acid or an ester-forming derivative thereof, or a mixture of the adipic acid and the ester-forming derivative and (ii) 5 mol% to 65 mol% of terephthalic acid or an ester-forming derivative thereof, or a mixture of the terephthalic acid and the ester-forming derivative (the total mol% of individuals is 100 mol%) and (b) a mixture containing 1,4-butanediol (note, however, that the molar ratio between the (a) and the (b) is 0.4:1 to 1.5:1), as disclosed in, for example, Japanese Unexamined Patent Application Publication (Translation of PCT application) No. JP-T-10-508640. In an embodiment of the present invention, it is possible to use, instead of the 1,4-butanediol, any of the following glycol compounds: ethylene glycol, propylene glycol, heptanediol, hexanediol, octanediol, nonanediol, decanediol, 1,4-cyclohexanedimethanol, neopentyl glycol, glycerin, pentaerythritol, bisphenol A, polyethylene glycol, polypropylene glycol, and polytetramethylene glycol. In an embodiment of the present invention, it is possible to use, instead of the adipic acid, any of the following dicarboxylic acids: oxalic acid, succinic acid, azelaic acid, dodecanedioic acid, malonic acid, glutaric acid, cyclohexanedicarboxylic acid, terephthalic acid, isophthalic acid, phthalic acid, naphthalenedicarboxylic acid, bis(p-carboxyphenyl)methane, anthracenedicarboxylic acid, 4,4'-diphenylether dicarboxylic acid, 5-sodium sulfoisophthalic acid, and 5-tetrabutylphosphonium isophthalic acid. Examples of a commercially available product of the PBAT include "Ecoflex C1200" manufactured by BASF SE.

The "PBSA" herein means an aliphatic polyester copolymer synthesized by an esterification reaction of and a condensation polymerization reaction of (i) an aliphatic diol component that contains 1,4-butanediol as a main component, (ii) an aliphatic dicarboxylic acid component that contains, as a main component(s), a succinic acid component(s) such as succinic acid and/or a derivative thereof, and (iii) adipic acid. Examples of a commercially available product of the PBSA include "BioPBS FD72" and "BioPBS FD92" each manufactured by Mitsubishi Chemical Corporation. These may be used alone or in combination of two or more.

The "PBS" herein means an aliphatic polyester copolymer synthesized by an esterification reaction and/or a transesterification reaction of and a condensation polymerization reaction of (i) an aliphatic diol component that contains 1,4-butanediol as a main component and (ii) an aliphatic dicarboxylic acid component that contains, as a main component(s), a succinic acid component(s) such as succinic acid and/or a derivative thereof. Examples of a commercially available product of the PBS include "BioPBS FZ71" and "BioPBS FZ91" each manufactured by Mitsubishi Chemical Corporation. These may be used alone or in combination of two or more.

The "PBST" is herein obtained by introduction of a terephthalate unit into the PBS described above. More specifically, the "PBST" means an aliphatic aromatic polyester copolymer synthesized by an esterification reaction of and a condensation polymerization reaction of (i) an aliphatic dicarboxylic acid component that contains, as a main component(s), a succinic acid component(s) such as succinic acid and/or a derivative thereof and (ii) terephthalic acid.

The "PBSAT" herein means a copolymer preferably containing, among aliphatic dicarboxylic acid residues, 70 mol% to 90 mol% of a succinic acid residue, 5 mol% to 15 mol% of an adipic acid residue, and 5 mol% to 15 mol% of a phthalic acid residue. Thus, in order to produce the PBSAT, dicarboxylic acid with the above ratio and 1,4-butanediol, which is aliphatic glycol, are used at a molar ratio of 1:1.2 to 2.0 to be subjected to an esterification reaction followed by a condensation polymerization reaction. A reactive group and a reaction condition that are used for the reactions may be any of those used in a conventional biodegradable resin such as PBS.

The "PBSeT" is herein intended to be obtained by replacement of the "adipic acid or an ester-forming derivative thereof" part of the PBAT described above with "sebacic acid or an ester-forming derivative thereof". Examples of a commercially available product of the PBSeT include "Ecoflex FS blend C2200" (registered trademark) manufactured by BASF SE.

The "PBAzT" is herein intended to be obtained by replacement of the "adipic acid or the ester-forming derivative thereof" part of the PBAT with "azelaic acid or an ester-forming derivative thereof".

The "PCL" herein means a polymer having a monomeric unit represented by the following formula (2):

[-(CH₂)₅-CO-O-] (2)

The PCL is typically obtained by ring-opening polymerization of ε-caprolactone with use of a cationic or anionic initiator (e.g., an active hydrogen compound such as an alcohol) as an initiator. However, the present invention is not limited to this, and the PCL that has been obtained by another production method can be used. Furthermore, in order to facilitate polymerization of the PCL, it is also possible to use an organometallic catalyst. Furthermore, for example, a terminal capping structure of the PCL is not particularly limited. The PCL that is used in an embodiment of the present invention typically has a melting point of 50°C to 65°C, a crystallization temperature of 10°C to 30°C, and a glass-transition temperature of -50°C to -60°C.

The PCL has a weight average molecular weight of preferably 30,000 to 500,000, and more preferably 100,000 to 400,000. The PCL that has a weight average molecular weight of less than 30,000 may cause the present aliphatic polyester-based resin composition to be brittle. The PCL that has a weight average molecular weight of more than 500,000 may make it difficult to process the present aliphatic polyester-based resin composition.

Examples of a commercially available product of the PCL include "Capa 6506" (in powder form, Mw = 130,000), "Capa 6500" (in pellet form, Mw = 130,000), "Capa 6806" (in powder form, Mw = 230,000), "Capa 6800" (in pellet form, Mw = 230,000), and "FB 100" (in pellet form, Mw = 300,000, containing crosslinked PCL) each available from Ingevity Corporation. These may be used alone or in combination of two or more.

In an embodiment of the present invention, the biodegradable resins other than the P3HA and having a glass transition temperature of not more than -10°C may be used alone or in combination of two or more.

In an embodiment of the present invention, the biodegradable resin other than the P3HA and having a glass transition temperature of not more than -10°C is preferably at least one selected from the group consisting of PBAT, PBSA, PBS, PBST, PBSAT, PBSeT, PBAzT, and PCL.

In an embodiment of the present invention, in order to achieve a balance between biomass plasticity and physical properties, the biodegradable resin other than the P3HA and having a glass transition temperature of not more than -10°C is contained in an amount of preferably 5 parts by weight to 40 parts by weight, more preferably 6 parts by weight to 38 parts by weight, even more preferably 7 parts by weight to 36 parts by weight, and particularly preferably 8 parts by weight to 35 parts by weight, with respect to 100 parts by weight of the present aliphatic polyester-based resin composition. Note that the amount in which the biodegradable resin other than the P3HA and having a glass transition temperature of not more than -10°C is contained means a used amount (blended amount) of the biodegradable resin other than the P3HA and having a glass transition temperature of not more than -10°C.

In an embodiment of the present invention, the (B) (i.e., the compatibilized biodegradable resin containing the reaction product of (i) the P3HA, (ii) the biodegradable resin other than the P3HA and having a glass transition temperature of not more than -10°C, and (iii) the peroxide) contained in the present aliphatic polyester-based resin composition has a dispersed particle diameter of, for example, not more than 1.5 µm, preferably not more than 1.3 µm, and more preferably not more than 1.0 µm from the viewpoint of achievement of excellent shock resistance. The dispersed particle diameter has a lower limit that is not particularly limited and is preferably as small as possible from the viewpoint of achievement of excellent shock resistance. The lower limit is, for example, not less than 0.1 µm, preferably not less than 0.15 µm, and more preferably not less than 0.2 µm. The dispersed particle diameter is measured by a method described in Examples. The dispersed particle diameter of the (B) contained in the present aliphatic polyester-based resin composition can also be said to be a dispersed particle diameter of particles derived from the (B) contained in the present aliphatic polyester-based resin composition. The particles derived from the (B) are herein at least particles containing the reaction product of (i) the P3HA, (ii) the biodegradable resin other than the P3HA and having a glass transition temperature of not more than -10°C, and (iii) the peroxide, and, optionally, particles containing (i) the P3HA, (ii) the biodegradable resin other than the P3HA and having a glass transition temperature of -10°C, and/or (iii) the peroxide.

### (Peroxide)

The resin (B) contains the peroxide, of which the reaction product is made. Specifically, the present aliphatic polyester-based resin composition may be a composition containing the peroxide in addition to the P3HA and the biodegradable resin other than the P3HA and having a glass transition temperature of not more than -10°C. The peroxide, of which the reaction product is made, may be an organic peroxide or an inorganic peroxide. In particular, the peroxide is preferably the organic peroxide because the organic peroxide has a one-minute half-life temperature suitable for melting and kneading.

In an embodiment of the present invention, the organic peroxide is not particularly limited, and a known organic peroxide can be used. In view of, for example, the melting temperature and/or kneading time, the organic peroxide is preferably an organic peroxide that is highly capable of drawing hydrogen from the P3HA and that has a structure having, in a molecule, no aromatic ring for coloring the P3HA, and more preferably an organic peroxide that has a one-minute half-life temperature of not more than 180°C.

The term "one-minute half-life temperature" herein means the temperature at which the organic peroxide is halved by thermal decomposition in one minute. The one-minute half-life temperature is more preferably 145°C to 165°C because such a one-minute half-life temperature promotes degradation of the organic peroxide and is suitable to cause a crosslinking reaction after the organic peroxide is uniformly dispersed. In a case where the organic peroxide to be used has a one-minute half-life temperature of more than 180°C, the P3HA and the organic peroxide need to be extruded at a temperature higher than 180°C in order to react with the P3HA. However, since the P3HA is thermally decomposed and causes a decrease in molecular weight, the organic peroxide tends to be unstably extruded, and a resulting aliphatic polyester-based resin composition and a molded product thereof also tend to be nonuniform.

In view of, for example, the melting temperature and/or kneading time, examples of the organic peroxide that is preferably used include diacylperoxide, peroxy ester, dialkyl peroxide, hydroperoxide, peroxyketal, and peroxycarbonate. Specific examples of the organic peroxide include butyl peroxyneododecanoate, octanoyl peroxide, dilauroyl peroxide, succinic peroxide, a mixture of toluoyl peroxide and benzoyl peroxide, benzoyl peroxide, bis(butylperoxy)trimethylcyclohexane, butyl peroxylaurate, dimethyldi(benzoyl peroxy) hexane, bis (butylperoxy)methylcyclohexane, bis(butylperoxy)cyclohexane, butyl peroxybenzoate, butylbis(butylperoxy)valerate, dicumyl peroxide, t-butylperoxymethyl monocarbonate, t-pentylperoxymethyl monocarbonate, t-hexylperoxymethyl monocarbonate, t-heptylperoxymethyl monocarbonate, t-octylperoxymethyl monocarbonate, 1,1,3,3-tetramethylbutylperoxymethyl monocarbonate, t-butylperoxyethyl monocarbonate, t-pentylperoxyethyl monocarbonate, t-hexylperoxyethyl monocarbonate, t-heptylperoxyethyl monocarbonate, t-octylperoxyethyl monocarbonate, 1,1,3,3-tetramethylbutylperoxyethyl monocarbonate, t-butylperoxy n-propyl monocarbonate, t-pentylperoxy n-propyl monocarbonate, t-hexylperoxy n-propyl monocarbonate, t-heptylperoxy n-propyl monocarbonate, t-octylperoxy n-propyl monocarbonate, 1,1,3,3-tetramethylbutylperoxy n-propyl monocarbonate, t-butylperoxyisopropyl monocarbonate, t-pentylperoxyisopropyl monocarbonate, t-hexylperoxyisopropyl monocarbonate, t-heptylperoxyisopropyl monocarbonate, t-octylperoxyisopropyl monocarbonate, 1,1,3,3-tetramethylbutyl peroxyisopropyl monocarbonate, t-butylperoxy n-butyl monocarbonate, t-pentylperoxy n-butyl monocarbonate, t-hexylperoxy n-butyl monocarbonate, t-heptylperoxy n-butyl monocarbonate, t-octylperoxy n-butyl monocarbonate, 1,1,3,3-tetramethylbutylperoxy n-butyl monocarbonate, t-butylperoxyisobutyl monocarbonate, t-pentylperoxyisobutyl monocarbonate, t-hexylperoxyisobutyl monocarbonate, t-heptylperoxyisobutyl monocarbonate, t-octylperoxyisobutyl monocarbonate, 1,1,3,3-tetramethylbutylperoxyisobutyl monocarbonate, t-butylperoxy sec-butyl monocarbonate, t-pentylperoxy sec-butyl monocarbonate, t-hexylperoxy sec-butyl monocarbonate, t-heptylperoxy sec-butyl monocarbonate, t-octylperoxy sec-butyl monocarbonate, 1,1,3,3-tetramethylbutylperoxy sec-butyl monocarbonate, t-butylperoxy t-butyl monocarbonate, t-pentylperoxy t-butyl monocarbonate, t-hexylperoxy t-butyl monocarbonate, t-heptylperoxy t-butyl monocarbonate, t-octylperoxy t-butyl monocarbonate, 1,1,3,3-tetramethylbutylperoxy t-butyl monocarbonate, t-butylperoxy 2-ethylhexyl monocarbonate, t-pentylperoxy 2-ethylhexyl monocarbonate, t-hexylperoxy 2-ethylhexyl monocarbonate, t-heptylperoxy 2-ethylhexyl monocarbonate, t-octylperoxy 2-ethylhexyl monocarbonate, 1,1,3,3-tetramethylbutylperoxy 2-ethylhexyl monocarbonate, diisobutyl peroxide, cumylperoxy neodecanoate, di-n-propylperoxy dicarbonate, diisopropylperoxy dicarbonate, di-sec-butylperoxy dicarbonate, 1,1,3,3-tetramethylbutylperoxy neodecanoate, bis(4-t-butylcyclohexyl)peroxy dicarbonate, bis(2-ethylhexyl)peroxy dicarbonate, t-hexylperoxy neodecanoate, t-butylperoxy neodecanoate, t-butylperoxy neoheptanoate, t-hexylperoxy pivalate, t-butylperoxy pivalate, di(3,5,5-trimethylhexanoyl)peroxide, dilauroyl peroxide, 1,1,3,3-tetramethylbutylperoxy-2-ethylhexanoate, disuccinate peroxide, 2,5-dimethyl-2,5-bis(2-ethylhexanoylperoxy)hexane, t-hexylperoxy-2-ethylhexanoate, di(4-methylbenzoyl)peroxide, dibenzoyl peroxide, t-butylperoxy 2-ethylhexyl carbonate, t-butylperoxyisopropyl carbonate, 1,6-bis(t-butylperoxycarbonyloxy)hexane, t-butylperoxy-3,5,5-trimethyl hexanoate, t-butylperoxy acetate, t-butylperoxy benzoate, t-amylperoxy-3,5,5-trimethylhexanoate, 2,2-bis(4,4-di-t-butylperoxycyclohexy)propane, and 2,2-di-t-butylperoxybutane.

Among the above organic peroxides, t-butylperoxy isopropyl monocarbonate, t-pentylperoxy isopropyl monocarbonate, t-hexylperoxy isopropyl monocarbonate, t-butylperoxy 2-ethylhexyl monocarbonate, t-pentylperoxy 2-ethylhexyl monocarbonate, and t-hexylperoxy 2-ethylhexyl monocarbonate are more preferable because these organic peroxides have good hydrogen drawing capability and have a one-minute half-life temperature of 145°C to 165°C.

These organic peroxides may be used singly or in combination of two or more.

Examples of the inorganic peroxide include hydrogen peroxide, potassium peroxide, calcium peroxide, sodium peroxide, magnesium peroxide, potassium persulfate, sodium persulfate, and ammonium persulfate.

Among the above inorganic peroxides, potassium persulfate, sodium persulfate, and ammonium persulfate are more preferable because these inorganic peroxides are handleable and have a decomposition temperature suitable for the temperature of melting and kneading.

These inorganic peroxides may be used singly or in combination of two or more. Alternatively, any of the organic peroxides listed earlier and any of the inorganic peroxides listed earlier may be used in combination.

In an embodiment of the present invention, the peroxide is contained in an amount of preferably 0.01 parts by weight to 0.50 parts by weight, more preferably 0.015 parts by weight to 0.48 parts by weight, even more preferably 0.020 parts by weight to 0.45 parts by weight, and particularly preferably 0.025 parts by weight to 0.43 parts by weight, with respect to 100 parts by weight of the present aliphatic polyester-based resin composition. The peroxide that is contained in an amount in the above range prevents or reduces an excessive condensation polymerization reaction and allows branching and a crosslinking reaction to efficiently progress. As a result, it is possible to obtain a long-chain branched/crosslinked/polymeric aliphatic polyester-based resin composition that hardly produces impurities such as gel. Note that the amount of the peroxide contained means a used amount (blended amount) of the peroxide.

### <Crystal nucleating agent and lubricant>

In an embodiment of the present invention, the present aliphatic polyester-based resin composition may further contain a crystal nucleating agent and/or a lubricant. The present aliphatic polyester-based resin composition that contains the crystal nucleating agent brings about an effect of improvement in, for example, molding processability and productivity. Furthermore, the present aliphatic polyester-based resin composition that contains the lubricant brings about an effect of improvement in surface smoothness of a molded product.

In an embodiment of the present invention, the crystal nucleating agent and/or the lubricant can be contained in the present aliphatic polyester-based resin composition by, for example, being mixed (preferably melted and kneaded) with the resin (A) before the resin (A) and the resin (B) are mixed (preferably melted and kneaded).

In an embodiment of the present invention, the crystal nucleating agent and/or the lubricant can be contained in the present aliphatic polyester-based resin composition by being added while the resin (A) and the resin (B) are being mixed (for example, melted and kneaded).

The crystal nucleating agent is not particularly limited provided that the crystal nucleating agent brings about the effect described earlier. Examples of the crystal nucleating agent include inorganic substances such as pentaerythritol, boron nitride, titanium oxide, talc, layered silicate, calcium carbonate, sodium chloride, and metal phosphate; sugar alcohol compounds derived from natural products, such as erythritol, galactitol, mannitol, and arabitol; dicarboxylic acid derivatives such as polyvinyl alcohol, chitin, chitosan, polyethylene oxide, aliphatic carboxylic acid amide, aliphatic carboxylate, aliphatic alcohol, aliphatic carboxylic acid ester, dimethyladipate. dibutyl adipate, diisodecyl adipate, and dibutyl sebacate; cyclic compounds each having, in a molecule, a functional group C=O and a functional group selected from NH, S, and O, such as indigo, quinacridone, and quinacridone magenta; sorbitol-based derivatives such as bisbenzylidene sorbitol and bis(p-methylbenzylidene)sorbitol; compounds each including a nitrogen-containing heteroaromatic nucleus, such as pyridine, triazine, and imidazole; phosphate ester compounds, bisamides of higher fatty acids, and metal salts of higher fatty acids; branched polylactic acids; and low molecular weight poly3-hydroxybutyrate. These crystal nucleating agents may be used singly or in combination of two or more.

The amount in which the crystal nucleating agent is contained is not particularly limited provided that crystallization of the P3HA can be promoted. The crystal nucleating agent is contained in an amount of preferably 0.5 parts by weight to 2.0 parts by weight, more preferably 0.6 parts by weight to 1.8 parts by weight, even more preferably 0.7 parts by weight to 1.6 parts by weight, and particularly preferably 0.8 parts by weight to 1.5 parts by weight, with respect to 100 parts by weight of the present aliphatic polyester-based resin composition. The crystal nucleating agent that is contained in a too small amount (e.g., less than 0.5 parts by weight) may be unable to bring about an effect as a crystal nucleating agent. The crystal nucleating agent that is contained in a too large amount (e.g., more than 2.0 parts by weight) may have an influence such as a decrease in viscosity during processing and/or a decrease in physical properties of a molded product.

In an embodiment of the present invention, the lubricant contains at least one selected from the group consisting of behenic acid amide, stearic acid amide, erucic acid amide, and oleic acid amide. This causes a resulting molded product to have lubricity (in particular, external lubricity). From the viewpoint of improving processability and productivity, the lubricant preferably contains behenic acid amide and/or erucic acid amide among behenic acid amide, stearic acid amide, erucic acid amide, and oleic acid amide.

In an embodiment of the present invention, the lubricant may be behenic acid amide, stearic acid amide, erucic acid amide, oleic acid amide, or a combination of two or more of these acid amides. Alternatively, the lubricant may be a combination of any of behenic acid amide, stearic acid amide, erucic acid amide, and oleic acid amide with a lubricant(s) other than behemic acid, stearinic acid amide, erucic acid amide, and oleic acid amide (hereinafter referred to as "other lubricant(s)"). The other lubricant(s) is/are exemplified by, but not limited to, alkylene fatty acid amides such as methylenebisstearic acid amide and ethylene bisstearic acid amide; glycerol monofatty acid esters such as polyethylene wax, oxidized polyester wax, glycerol monostearate, glycerol monobehenate, and glycerol monolaurate; organic acid monoglycerides such as succinic acid saturated fatty acid monoglyceride; sorbitan fatty acid esters such as sorbitan behenate, sorbitan stearate, and sorbitan laurate; polyglycerol fatty acid esters such as diglycerol stearate, diglycerol laurate, tetraglycerol stearate, tetraglycerol laurate, decaglycerol stearate, and decaglycerol laurate; and higher alcohol fatty acid esters such as stearyl stearate. The other lubricants listed above may be used singly or in combination of two or more.

An amount of the lubricant(s) contained (in a case where a plurality of lubricants are used, a total amount of the lubricants contained) is not particularly limited provided that lubricity can be imparted to a resulting molded product. The lubricant(s) is/are contained in an amount of preferably 0.1 parts by weight to 2.0 parts by weight, more preferably 0.2 parts by weight to 1.6 parts by weight, even more preferably 0.3 parts by weight to 1.4 parts by weight, and particularly preferably 0.4 parts by weight to 1.2 parts by weight, with respect to 100 parts by weight of the present aliphatic polyester-based resin composition. The lubricant that is contained in a too small amount (e.g., less than 0.1 parts by weight) may exhibit no effect. The lubricant that is contained in a too large amount (e.g., more than 2.0 parts by weight) may bleed out to a surface of the molded product and may impair an appearance of the surface of the molded product.

### <Other component(s)>

The present aliphatic polyester-based resin composition may contain other component(s) in addition to the P3HA, the biodegradable resin other than the P3HA and having a glass transition temperature of not more than -10°C, the peroxide, and the crystal nucleating agent and/or the lubricant, provided that the other component(s) does/do not impair a function of a molded product including a resulting aliphatic polyester-based resin composition. Examples of the other component(s) include a plasticizing agent; an inorganic filler; an oxidation inhibitor; a ultraviolet absorber; coloring agents such as a dye and a pigment; and an antistatic agent.

The plasticizing agent is exemplified by, but not particularly limited to modified glycerol-based compounds such as glycerol diacetomonolaurate, glycerol diacetomonocaprylate, and glycerol diacetomonodecanoate; adipic acid ester-based compounds such as diethylhexyladipate, dioctyl adipate, and diisononyl adipate; polyether ester-based compounds such as polyethylene glycol dibenzoate, polyethylene glycol dicaprylate, and polyethylene glycol diisostearate; benzoic acid ester compounds; epoxidized soybean oils; 2-ethylhexyl epoxidized fatty acids; and sebacic acid monoesters. These plasticizing agents may be used singly or in combination of two or more. Among the plasticizing agents listed above, the modified glycerol-based compounds and the polyether ester-based compounds are preferable due to their availability and high effectiveness. These compounds may be used singly or in combination of two or more.

The inorganic filler is exemplified by, but not particularly limited to clay, synthetic silicon, carbon black, barium sulfate, mica, glass fiber, whisker, carbon fiber, calcium carbonate, magnesium carbonate, glass powder, metal powder, kaolin, graphite, molybdenum disulfide, and zinc oxide. These inorganic fillers may be used singly or in combination of two or more.

The oxidation inhibitor is exemplified by, but not particularly limited to a phenolic oxidation inhibitor, a phosphorous oxidation inhibitor, and a sulfur-based oxidation inhibitor. These oxidation inhibitors may be used singly or in combination of two or more.

The ultraviolet absorber is exemplified by, but not particularly limited to benzophenone-based compounds, benzotriazole-based compounds, triazine-based compounds, salicylic acid-based compounds, cyanoacrylate-based compounds, and nickel complex salt-based compounds. These ultraviolet absorbers may be used singly or in combination of two or more.

The coloring agents such as a pigment and a dye are exemplified by, but not particularly limited to inorganic coloring agents such as titanium oxide, calcium carbonate, chromium oxide, cuprous oxide, calcium silicate, iron oxide, carbon black, graphite, titanium yellow, and cobalt blue; soluble azo pigments such as lake red, lithol red, and brilliant carmine; insoluble azo pigments such as dinitrian orange and fast yellow; phthalocyanine pigments such as monochlorophthalocyanine blue, polychlorophthalocyanine blue, and polybromophthalocyanine green; condensation polycyclic pigments such as indigo blue, perylene red, isoindolinone yellow, and quinacridone red; and dyes such as oracet yellow. These coloring agents may be used singly or in combination of two or more.

The antistatic agent is exemplified by, but not particularly limited to low molecular antistatic agents such as fatty acid ester compounds, aliphatic ethanolamine compounds, and aliphatic ethanolamide compounds, and high molecular antistatic agents. These antistatic agents may be used singly or in combination of two or more.

The amounts of the above components contained are not particularly limited provided that the effects of the present invention can be exhibited. The amounts may be set as appropriate by a person skilled in the art.

### [3. Method for producing aliphatic polyester-based resin composition]

A method for producing an aliphatic polyester-based resin composition in accordance with an the embodiment of the present invention (hereinafter referred to as "the present production method") includes the steps of: (a) melting and kneading (i) poly(3-hydroxyalkanoate), (ii) a biodegradable resin other than the poly(3-hydroxyalkanoate) and having a glass transition temperature of not more than -10°C, and (iii) a peroxide so as to obtain a compatibilized biodegradable resin; and (b) melting and kneading the compatibilized biodegradable resin obtained in the step (a) and the poly(3-hydroxyalkanoate) so as to obtain the aliphatic polyester-based resin composition.

In the present production method, first, (i) a step of mixing (preferably melting and kneading) the P3HA, the biodegradable resin other than the P3HA and having a glass transition temperature of not more than -10°C, the peroxide, and, optionally, the crystal nucleating agent, the lubricant, and any of the other above-listed additives with use of, for example, an extruder, a kneader, a Banbury mixer, or a roll so as to prepare a pellet containing the compatibilized biodegradable resin is carried out. The step (i) can be rephrased as a step of reacting the P3HA, the biodegradable resin other than the P3HA and having a glass transition temperature of not more than -10°C, and the peroxide so as to obtain a reaction product. The step (i) can also be rephrased as a step of obtaining the resin (B). Next, apart from the step (i), (ii) a step of melting and kneading the P3HA, and, optionally, the crystal nucleating agent, the lubricant, and any of the other above-listed additives with use of, for example, an extruder, a kneader, a Banbury mixer, or a roll so as to prepare a pellet containing a resin containing the P3HA is carried out. The step (ii) can be rephrased as a step of obtaining the resin (A). Subsequently, the two pellets (i.e., the pellet obtained in the step (i) and containing the compatibilized biodegradable resin and the pellet obtained in the step (ii) and containing the resin containing the P3HA) are melted and kneaded with use of, for example, an extruder, a kneader, a Banbury mixer, or a roll, so that an aliphatic polyester-based resin composition is obtained. Finally, the aliphatic polyester-based resin composition obtained through the above steps is extruded into strands and then cut. This makes it possible to obtain a molded product containing the aliphatic polyester-based resin composition that has a particulate shape such as a bar-like shape, a cylindrical shape, an elliptical columnar shape, a spherical shape, a cubic shape, or a rectangular parallelepiped shape.

In the above melting and kneading step, (i) the temperature at which the P3HA, the biodegradable resin other than the P3HA and having a glass transition temperature of not more than -10°C, the peroxide, and, optionally, the crystal nucleating agent, the lubricant, and any of the other above-listed additives are melted and kneaded and (ii) the temperature at which the P3HA, and, optionally, the crystal nucleating agent, the lubricant, and any of the other above-listed additives are melted and kneaded cannot be absolutely defined because the temperatures (i) and (ii) vary depending on, for example, a melting point and/or a melt viscosity of the P3HA to be used, and/or, for example, a melt viscosity of the biodegradable resin other than the P3HA and having a glass transition temperature of not more than -10°C. However, a melted and kneaded product has a temperature of preferably 120°C to 200°C, more preferably 125°C to 195°C, and even more preferably 130°C to 190°C at a die outlet. The melted and kneaded product that has a temperature of less than 120°C at the die outlet may cause poor dispersion of the biodegradable resin other than the P3HA and having a glass transition temperature of not more than -10°C. The melted and kneaded product that has a temperature of more than 200°C at the die outlet may cause thermal decomposition of the P3HA.

Note that, in the present production method, the details described earlier in <P3HA>, <Biodegradable resin other than P3HA and having glass transition temperature of not more than -10°C>, <Peroxide>, <Crystal nucleating agent and lubricant>, and <Other component(s)> are incorporated by reference.

The present section has discussed, as an example of the present production method, a method of mixing the components (such as the P3HA, the biodegradable resin other than the P3HA and having a glass transition temperature of not more than -10°C, and the peroxide) by melting and kneading. However, the present production method is not limited to this.

### [4. Molded product containing aliphatic polyester-based resin composition]

A molded product in accordance with an embodiment of the present invention (hereinafter referred to as "the present molded product") contains the present aliphatic polyester-based resin composition.

The present molded product is not particularly limited provided that the present molded product contains the present aliphatic polyester-based resin composition. Examples of the present molded product include paper, a film, a sheet, a tube, a plate, a rod, a container (e.g., a bottle container), a food tray, a bag, and a component.

In an embodiment of the present invention, the present molded product can be combined with a molded product (such as fiber, thread, rope, fabric, knitted fabric, nonwoven fabric, paper, a film, a sheet, a tube, a plate, a rod, a container, a bag, a component, or a foamed product) made of materials other than those of the present molded product so as to improve its physical properties. These materials are also preferably biodegradable.

In an embodiment of the present invention, 50% fracture energy at a measurement temperature of 25°C is, for example, not less than 0.5 J, preferably not less than 0.8 J, and more preferably not less than 1.0 J from the viewpoint of achievement of excellent shock resistance. Higher 50% fracture energy at a measurement temperature of 25°C is better. The 50% fracture energy at a measurement temperature of 25°C has an upper limit that is not particularly limited and is, for example, not more than 30 J.

In an embodiment of the present invention, 50% fracture energy at a measurement temperature of 0°C is, for example, not less than 0.12 J, preferably not less than 0.14 J, and more preferably not less than 0.15 J from the viewpoint of achievement of excellent shock resistance. Higher 50% fracture energy at a measurement temperature of 25°C is better. The 50% fracture energy at a measurement temperature of 25°C has an upper limit that is not particularly limited and is, for example, not more than 30 J. The above 50% fracture energy is measured by a method described in Examples.

In an embodiment of the present invention, 50% fracture energy of the present aliphatic polyester-based resin composition may vary in accordance with (i) the amount in which the biodegradable resin other than the P3HA and having a glass transition temperature of not more than -10°C is contained in the present aliphatic polyester-based resin composition and/or (ii) the temperature at which the 50% fracture energy is measured.

In an embodiment of the present invention, in a case where the biodegradable resin other than the P3HA and having a glass transition temperature of not more than -10°C is contained in an amount of 10 parts by weight, 50% fracture energy at a measurement temperature of 25°C is preferably not less than 0.3 J, more preferably not less than 0.5 J, and even more preferably not less than 0.7 J. In an embodiment of the present invention, in a case where the biodegradable resin other than the P3HA and having a glass transition temperature of not more than -10°C is contained in an amount of 10 parts by weight, 50% fracture energy at a measurement temperature of 0°C is preferably not less than 0.11 J, more preferably not less than 0.13 J, and even more preferably not less than 0.15 J.

In an embodiment of the present invention, in a case where the biodegradable resin other than the P3HA and having a glass transition temperature of not more than -10°C is contained in an amount of 20 parts by weight, 50% fracture energy at a measurement temperature of 25°C is preferably not less than 5.0 J, more preferably not less than 7.0 J, and even more preferably not less than 9.0 J. In an embodiment of the present invention, in a case where the biodegradable resin other than the P3HA and having a glass transition temperature of not more than -10°C is contained in an amount of 20 parts by weight, 50% fracture energy at a measurement temperature of 0°C is preferably not less than 1.0 J, more preferably not less than 2.0 J, and even more preferably not less than 3.0 J.

In an embodiment of the present invention, in a case where the biodegradable resin other than the P3HA and having a glass transition temperature of not more than -10°C is contained in an amount of 30 parts by weight, 50% fracture energy at a measurement temperature of 0°C is preferably not less than 8.1 J, more preferably not less than 8.5 J, and even more preferably not less than 9.0 J.

In an embodiment of the present invention, the present molded product is obtained by molding an aliphatic polyester-based resin composition obtained by the method described earlier in [3. Method for producing aliphatic polyester-based resin composition]. As such a method, for example, it is possible to employ any of the following molding methods: injection molding methods such as an injection molding method that is commonly employed to mold a thermoplastic resin, an injection compression molding method, and a gas-assisted molding method; a casting molding method; a blow molding method; and an inflation molding method. Furthermore, in accordance with a purpose, it is also possible to employ not only the methods listed above but also the following methods: an in-mold molding method, a gas press molding method, a two-color molding method, a sandwich molding method, PUSH-PULL, and SCORIM. Note that the injection molding methods are not limited to the above methods. A molding temperature during injection molding is preferably 140°C to 190°C, and a mold temperature is preferably 20°C to 80°C, and more preferably 30°C to 70°C.

The present invention is not limited to the embodiments described above, but may be altered within the scope of the claims. The present invention also encompasses, in its technical scope, any embodiment derived by combining technical means disclosed in differing embodiments.

That is, an embodiment of the present invention is as follows.
<1> An aliphatic polyester-based resin composition containing the following (A) and (B): (A) poly(3-hydroxyalkanoate); and (B) a compatibilized biodegradable resin containing a reaction product of (i) the poly(3-hydroxyalkanoate), (ii) a biodegradable resin other than the poly(3-hydroxyalkanoate) and having a glass transition temperature of not more than -10°C, and (iii) a peroxide, the (B) having a dispersed particle diameter of 0.1 µm to 1.5 µm in the aliphatic polyester-based resin composition.
<2> The aliphatic polyester-based resin composition recited in <1>, wherein the (B) is contained in an amount of 5 parts by weight to 50 parts by weight with respect to 100 parts by weight of the aliphatic polyester-based resin composition.
<3> The aliphatic polyester-based resin composition recited in <1> or <2>, wherein the peroxide is contained in an amount of 0.01 parts by weight to 0.5 parts by weight with respect to 100 parts by weight of the aliphatic polyester-based resin composition.
<4> The aliphatic polyester-based resin composition recited in any one of <1> to <3>, wherein the biodegradable resin other than the poly(3-hydroxyalkanoate) and having a glass transition temperature of not more than -10°C, the biodegradable resin being contained in the (B), is at least one selected from the group consisting of polybutylene adipate terephthalate, polybutylene succinate adipate, polybutylene succinate, polybutylene succinate terephthalate, polybutylene succinate adipate terephthalate, polybutylene sebacate terephthalate, polybutylene azelate terephthalate, and polycaprolactone.
<5> The aliphatic polyester-based resin composition recited in any one of <1> to <4>, wherein the peroxide is an organic peroxide having a one-minute half-life temperature of not more than 180°C.
<6> The aliphatic polyester-based resin composition recited in any one of <1> to <5>, wherein the peroxide is at least one selected from the group consisting of t-butylperoxyisopropyl monocarbonate, t-pentylperoxyisopropyl monocarbonate, t-hexylperoxyisopropyl monocarbonate, t-butylperoxy2-ethylhexyl monocarbonate, t-pentylperoxy2-ethylhexyl monocarbonate, and t-hexylperoxy2-ethylhexyl monocarbonate.
<7> The aliphatic polyester-based resin composition recited in any one of <1> to <6>, further containing a crystal nucleating agent and/or a lubricant.
<8> The aliphatic polyester-based resin composition recited in any one of <1> to <7>, wherein the compatibilized biodegradable resin is obtained by melting and kneading (i) the (poly(3-hydroxyalkanoate), (ii) the biodegradable resin other than the poly(3-hydroxyalkanoate) and having a glass transition temperature of not more than -10°C, and (iii) the peroxide.
<9> The aliphatic polyester-based resin composition recited in any one of <1> to <8>, wherein the aliphatic polyester-based resin composition is obtained by melting and kneading the (A) and the (B).
<10> A molded product containing an aliphatic polyester-based resin composition recited in any one of <1> to <9>.
<11> A method for producing an aliphatic polyester-based resin composition, including the steps of: (a) melting and kneading (i) poly(3-hydroxyalkanoate), (ii) a biodegradable resin other than the poly(3-hydroxyalkanoate) and having a glass transition temperature of not more than -10°C, and (iii) a peroxide so as to obtain a compatibilized biodegradable resin; and (b) melting and kneading the compatibilized biodegradable resin obtained in the step (a) and the poly(3-hydroxyalkanoate) so as to obtain the aliphatic polyester-based resin composition.
< 12> The method recited in <11>, wherein in the step (b), the compatibilized biodegradable resin is used in an amount of 5 parts by weight to 50 parts by weight with respect to 100 parts by weight of the aliphatic polyester-based resin composition.
< 13> The method recited in <11> or <12>, wherein in the step (a), the peroxide is used in an amount of 0.01 parts by weight to 0.5 parts by weight with respect to 100 parts by weight of the aliphatic polyester-based resin composition.
< 14> The method recited in any one of <11> to < 13>, wherein in the step (a), the biodegradable resin other than the poly(3-hydroxyalkanoate) and having a glass transition temperature of not more than -10°C is at least one selected from the group consisting of polybutylene adipate terephthalate, polybutylene succinate adipate, polybutylene succinate, polybutylene succinate terephthalate, polybutylene succinate adipate terephthalate, polybutylene sebacate terephthalate, polybutylene azelate terephthalate, and polycaprolactone.
<15> The method recited in any one of <11> to <14>, wherein in the step (a), the peroxide is an organic peroxide having a one-minute half-life temperature of not more than 180°C. Examples

The following description shows Examples to discuss the present invention in more detail. Note, however, that the present invention is not limited to these Examples.

### [Material]

### (P3HA)

As P3HA, Examples used the following resins.
· Kaneka Biodegradable Polymer PHBH (registered trademark) X131A [poly(3-hydroxybutyrate-co-3-hydroxyhexanoate)] manufactured by KANEKA CORPORATION
· Kaneka Biodegradable Polymer PHBH (registered trademark) 151C [poly(3-hydroxybutyrate-co-3-hydroxyhexanoate)] manufactured by KANEKA CORPORATION

### (Biodegradable resin other than P3HA and having glass transition temperature of not more than -10°C)

As a biodegradable resin other than the P3HA and having a glass transition temperature of not more than -10°C, Examples used PBAT ("Ecoflex C1200" manufactured by BASF SE and having a glass transition temperature of -30°C).

### (Peroxide)

As a peroxide, Examples used t-butylperoxyisopropyl monocarbonate ("PERBUTYL I" manufactured by NOF CORPORATION). Note that "PERBUTYL I" is herein also referred to as "PBI".

### (Crystal nucleating agent)

As a crystal nucleating agent, Examples used pentaerythritol ("Neulizer P" manufactured by Mitsubishi Chemical Corporation). Note that Neulizer P" is herein also referred to as "PETL".

### [Measurement and evaluation method]

### (50% fracture energy)

Molded products (test pieces) obtained in Examples and Comparative Examples were aged in a thermostatic chamber at 25°C for 7 days, and 50% fracture energy was measured with use of a DuPont drop impact tester (manufactured by Toyo Seiki Seisaku-sho, Ltd.) in conformity with ASTM D 2794 (test piece thickness: 1.0 mm, iron ball weight: 0.3 kg to 2.0 kg, radius of impact core point: 7.9 mm, measurement temperature: 25°C or 0°C, number of measurement times: 20 times, unit: J). The 50% fracture height was measured by this measurement, and the 50% fracture energy was calculated from a measured value of the 50% fracture height. Higher 50% fracture energy is better, and the 50% fracture energy is an indicator of impact resistance. Note that the measured 50% fracture energy which is more than 20.6 J is described as ">20.6 J" and that the measured 50% fracture energy which is less than 0.01 J is described as "<0.01 J".

### (Dispersed particle diameter)

A dispersed particle diameter of a compatibilized biodegradable resin contained in a molded product was measured as below. Specifically, a transmission electron microscope was used to observe a cross section of each of the molded products (test pieces) obtained in Examples and Comparative Examples, and a diameter obtained by averaging particle diameters of observed particles was regarded as the dispersed particle diameter.

### [Example 1]

### (Preparation of pellet)

A mixture of 85 parts by weight of X131A and 1 part by weight of PETL, the mixture having been dried at 60°C for 3 hours, was melted and kneaded with use of a 26 mm twin screw extruder (TEM26, manufactured by Toshiba Machine Co., Ltd.) under the following conditions: a molding temperature of 160°C, a screw rotation speed of 100 rpm, a discharge quantity of 10 kg/hr, and a die diameter of 3 mmϕ. Thus, a melted and kneaded product (A) was obtained. The melted and kneaded product (A) was taken from a die in strand form and cut into pellet form. Thus, a pellet (A) was prepared.

Furthermore, a mixture of 29.3 parts by weight of X131A, 70.7 parts by weight of Ecoflex C1200, and 0.200 parts by weight of PBI, the mixture having been dried at 60°C for 3 hours, was melted and kneaded and reacted with use of a 26 mm twin screw extruder (TEM26, manufactured by Toshiba Machine Co., Ltd.) under conditions similar to the conditions described above. Thus, a melted and kneaded product (B) (resin (B)), which is a compatibilized biodegradable resin containing a reaction product, was obtained. The melted and kneaded product (B) was taken from a die in strand form and cut into pellet form. Thus, a pellet (B) was prepared.

### (Preparation of pellet of resin composition)

A mixture of 86 parts by weight of the pellet (A) and 14 parts by weight of the pellet (B), the mixture having been dried at 60°C for 3 hours, was melted and kneaded with use of a 26 mm twin screw extruder (TEM26, manufactured by Toshiba Machine Co., Ltd.) under conditions similar to the conditions described above. Thus, a resin composition (aliphatic polyester-based resin composition) was obtained. The resin composition was taken from a die in strand form and cut into pellet form. Thus, a pellet (C) was prepared.

### (Injection molding)

The pellet (C) that had been dried at 60°C for 3 hours was subjected to injection molding with use of an injection molding machine (CH150B, manufactured by Toyo Seiki Metal Co., Ltd.) under the following conditions: cylinder temperatures H1 = 160°C, H2 = 150°C, and H3 = 140°C, a nozzle temperature of 160°C, a mold temperature of 45°C, and a cooing time of 30 seconds. Thus, a molded product (80 mm × 80 mm × 1 mm) was obtained. Then, the obtained molded product was divided into four test pieces of 40 mm × 40 mm × 1 mm and subjected to measurement of the 50% fracture energy and the dispersed particle diameter by the method described earlier. Table 1 shows results of the measurement.

### [Example 2]

Example 2 obtained a resin composition (aliphatic polyester-based resin composition) and a molded product (test piece) as in the case of Example 1 except that the X131A content in the melted and kneaded product (A) was set to 71 parts by weight and that a mixture of 72 parts by weight of the pellet (A) and 28 parts by weight of the pellet (B) was melted and kneaded. Then, the obtained molded product was used to be subjected to measurement of the 50% fracture energy and the dispersed particle diameter by the method described earlier. Table 1 shows results of the measurement.

### [Example 3]

Example 3 obtained a resin composition (aliphatic polyester-based resin composition) and a molded product (test piece) as in the case of Example 1 except that the X131A content in the melted and kneaded product (A) was set to 57 parts by weight and that a mixture of 58 parts by weight of the pellet (A) and 42 parts by weight of the pellet (B) was melted and kneaded. Then, the obtained molded product was used to be subjected to measurement of the 50% fracture energy and the dispersed particle diameter by the method described earlier. Table 1 shows results of the measurement.

### [Comparative Example 1]

### (Preparation of pellet)

A mixture of 99 parts by weight of X131A and 1 part by weight of PETL, the mixture having been dried at 60°C for 3 hours, was melted and kneaded with use of a 26 mm twin screw extruder (TEM26, manufactured by Toshiba Machine Co., Ltd.) under the following conditions: a molding temperature of 160°C, a screw rotation speed of 100 rpm, a discharge quantity of 10 kg/hr, and a die diameter of 3 mmϕ. Thus, a kneaded product was obtained. The kneaded product was taken from a die in strand form and cut into pellet form. Thus, a pellet (resin composition) was prepared.

### (Injection molding)

The pellet that had been dried at 60°C for 3 hours was subjected to injection molding with use of an injection molding machine (CH150B, manufactured by Toyo Seiki Metal Co., Ltd.) under the following conditions: cylinder temperatures H1 = 160°C, H2 = 150°C, and H3 = 140°C, a nozzle temperature of 160°C, a mold temperature of 45°C, and a cooing time of 30 seconds. Thus, a molded product (80 mm × 80 mm × 1 mm) was obtained. Then, the obtained molded product was divided into four test pieces of 40 mm × 40 mm × 1 mm and subjected to measurement of the 50% fracture energy by the method described earlier. Table 1 shows results of the measurement.

### [Comparative Example 2]

Comparative Example 2 obtained a pellet (resin composition) and a molded product (test piece) as in the case of Comparative Example 1 except that the X131A was replaced with 151C. Then, the obtained molded product was used to be subjected to measurement of the 50% fracture energy by the method described earlier. Table 1 shows results of the measurement.

### [Comparative Example 3]

### (Preparation of pellet)

A mixture of 90 parts by weight of X131A, 1 part by weight of PETL, and 10 parts by weight of Ecoflex C1200, the mixture having been dried at 60°C for 3 hours, was melted and kneaded with use of a 26 mm twin screw extruder (TEM26, manufactured by Toshiba Machine Co., Ltd.) under the following conditions: a molding temperature of 160°C, a screw rotation speed of 100 rpm, a discharge quantity of 10 kg/hr, and a die diameter of 3 mmϕ. Thus, a kneaded product was obtained. The kneaded product was taken from a die in strand form and cut into pellet form. Thus, a pellet (resin composition) was prepared.

### (Injection molding)

The pellet that had been dried at 60°C for 3 hours was subjected to injection molding with use of an injection molding machine (CH150B, manufactured by Toyo Seiki Metal Co., Ltd.) under the following conditions: cylinder temperatures H1 = 160°C, H2 = 150°C, and H3 = 140°C, a nozzle temperature of 160°C, a mold temperature of 45°C, and a cooing time of 30 seconds. Thus, a molded product (80 mm × 80 mm × 1 mm) was obtained. Then, the obtained molded product was divided into four test pieces of 40 mm × 40 mm × 1 mm and subjected to measurement of the 50% fracture energy and the dispersed particle diameter by the method described earlier. Table 1 shows results of the measurement.

### [Comparative Example 4]

Comparative Example 4 obtained a pellet (resin composition) and a molded product (test piece) as in the case of Comparative Example 3 except that the amount of the X131A was set to 80 parts by weight and the amount of the Ecoflex C1200 was set to 20 parts by weight. Then, the obtained molded product was used to be subjected to measurement of the 50% fracture energy and the dispersed particle diameter by the method described earlier. Table 1 shows results of the measurement.

### [Comparative Example 5]

Comparative Example 5 obtained a pellet (resin composition) and a molded product (test piece) as in the case of Comparative Example 3 except that the amount of the X131A was set to 70 parts by weight and the amount of the Ecoflex C1200 was set to 30 parts by weight. Then, the obtained molded product was used to be subjected to measurement of the 50% fracture energy and the dispersed particle diameter by the method described earlier. Table 1 shows results of the measurement.

### [Comparative Example 6]

Comparative Example 6 obtained a pellet (resin composition) and a molded product (test piece) as in the case of Comparative Example 3 except that 0.2 parts by weight of PBI was further added to the mixture in (Preparation of pellet). Then, the obtained molded product was used to be subjected to measurement of the 50% fracture energy and the dispersed particle diameter by the method described earlier. Table 1 shows results of the measurement.

### [Comparative Example 7]

Comparative Example 7 obtained a pellet (resin composition) and a molded product (test piece) as in the case of Comparative Example 4 except that 0.2 parts by weight of PBI was further added to the mixture in (Preparation of pellet). Then, the obtained molded product was used to be subjected to measurement of the 50% fracture energy and the dispersed particle diameter by the method described earlier. Table 1 shows results of the measurement.

### [Comparative Example 8]

Comparative Example 8 obtained a pellet (resin composition) and a molded product (test piece) as in the case of Comparative Example 5 except that 0.2 parts by weight of PBI was further added to the mixture in (Preparation of pellet). Then, the obtained molded product was used to be subjected to measurement of the 50% fracture energy and the dispersed particle diameter by the method described earlier. Table 1 shows results of the measurement.

**[Table 1]**

| | Content of P3HA (part by weight) | Content of biodegradable resin having glass transition temperature of not more than -10°C (part by weight) | 50% fracture energy (J) | | Dispersed particle diameter (µm) |
|---|---|---|---|---|---|
| | | | 25°C | 0°C | |
| Example 1 | 90.1 | 9.9 | 1.3 | 0.2 | 0.8 |
| Example 2 | 80.2 | 19.8 | 12.4 | 4.9 | 0.4 |
| Example 3 | 70.3 | 29.7 | >20.6 | 10.8 | 0.2 |
| Comparative Example 1 | 100 | 0 | 0.1 | <0.1 | - |
| Comparative Example 2 | 100 | 0 | 0.3 | <0.1 | - |
| Comparative Example 3 | 90 | 10 | 0.1 | 0.1 | 2.8 |
| Comparative Example 4 | 80 | 20 | 3.9 | 0.2 | 2.2 |
| Comparative Example 5 | 70 | 30 | >20.6 | 7.9 | 1.8 |
| Comparative Example 6 | 90 | 10 | 0.2 | <0.1 | 2.3 |
| Comparative Example 7 | 80 | 20 | 4.5 | 0.8 | 2.0 |
| Comparative Example 8 | 70 | 30 | >20.6 | 8.0 | 1.6 |

In Table 1, each of "Content of P3HA (part by weight)" and "Content of biodegradable resin having glass transition temperature of not more than -10°C (part by weight)" indicates a proportion of a corresponding resin in a resin composition, i.e., indicates a proportion of a corresponding resin to 100 parts by weight of the resin composition.

### [Results]

As shown in Table 1, a comparison between Examples 1 to 3 and Comparative Examples 1 and 2 demonstrates the following: In a case where an aliphatic polyester-based resin composition contains a biodegradable resin other than P3HA and having a glass transition temperature of not more than - 10°C, such an aliphatic polyester-based resin composition has excellent shock resistance.

Furthermore, Table 1 shows comparisons between Examples and Comparative Examples (i.e., a comparison between Example 1 and Comparative Examples 3 and 6, a comparison between Example 2 and Comparative Examples 4 and 7, and a comparison between Example 3 and Comparative Examples 5 and 8). The comparisons each demonstrate that Examples have more excellent shock resistance than Comparative Examples. Note that between Examples and Comparative Examples, the biodegradable resin other than the P3HA and having a glass transition temperature of not more than -10°C was contained (used) in the aliphatic polyester-based resin composition in an identical amount. In particular, a comparison between Example 1 and Comparative Example 6, a comparison between Example 2 and Comparative Example 7, and a comparison between Example 3 and Comparative Example 8 demonstrate the following: Excellent shock resistance was achieved in Examples in each of which some of P3HA was preliminarily melted and kneaded with a biodegradable resin other than the P3HA and having a glass transition temperature of not more than -10°C and a peroxide so as to obtain a reaction product, and the reaction product was melted and kneaded with the rest of the P3HA.

Moreover, Fig. 1 and a comparison of Example 2 and Comparative Examples 5 and 8 demonstrate that a compatibilized biodegradable resin has a smaller dispersed particle diameter (i.e., the compatibilized biodegradable resin is more finely dispersed) in each of Examples.

The above description shows that an aliphatic polyester-based resin composition having excellent shock resistance is obtained in a case where a compatibilized biodegradable resin containing a reaction product obtained by preliminarily melting and kneading some of P3HA, contained in the aliphatic polyester-based resin composition, with a biodegradable resin other than the P3HA and having a glass transition temperature of not more than -10°C and a peroxide is melted and kneaded with the rest of the P3HA. The above description also suggests that such shock resistance is caused by a decrease in dispersed particle diameter of the compatibilized biodegradable resin contained in the resin composition.

### Industrial Applicability

The present invention makes it possible to provide (i) an aliphatic polyester-based resin composition that is biodegradable and has excellent shock resistance and (ii) a molded product of the aliphatic polyester-based resin composition. Thus, the present invention can be suitably used in the fields of agriculture, fishery, forestry, horticulture, medicine, hygiene, food industry, clothing, non-clothing, packaging, motor vehicles, and building materials, and other fields.

## Claims

1. An aliphatic polyester-based resin composition comprising the following (A) and (B):
(A) poly(3-hydroxyalkanoate); and
(B) a compatibilized biodegradable resin containing a reaction product of (i) the poly(3-hydroxyalkanoate), (ii) a biodegradable resin other than the poly(3-hydroxyalkanoate) and having a glass transition temperature of not more than - 10°C, and (iii) a peroxide,
the (B) having a dispersed particle diameter of 0.1 µm to 1.5 pm in the aliphatic polyester-based resin composition.

2. The aliphatic polyester-based resin composition as set forth in claim 1, wherein the (B) is contained in an amount of 5 parts by weight to 50 parts by weight with respect to 100 parts by weight of the aliphatic polyester-based resin composition.

3. The aliphatic polyester-based resin composition as set forth in claim 1 or 2, wherein the peroxide is contained in an amount of 0.01 parts by weight to 0.5 parts by weight with respect to 100 parts by weight of the aliphatic polyester-based resin composition.

4. The aliphatic polyester-based resin composition as set forth in any one of claims 1 to 3, wherein the biodegradable resin other than the poly(3-hydroxyalkanoate) and having a glass transition temperature of not more than -10°C, the biodegradable resin being contained in the (B), is at least one selected from the group consisting of polybutylene adipate terephthalate, polybutylene succinate adipate, polybutylene succinate, polybutylene succinate terephthalate, polybutylene succinate adipate terephthalate, polybutylene sebacate terephthalate, polybutylene azelate terephthalate, and polycaprolactone.

5. The aliphatic polyester-based resin composition as set forth in any one of claims 1 to 4, wherein the peroxide is an organic peroxide having a one-minute half-life temperature of not more than 180°C.

6. The aliphatic polyester-based resin composition as set forth in any one of claims 1 to 5, wherein the peroxide is at least one selected from the group consisting of t-butylperoxyisopropyl monocarbonate, t-pentylperoxyisopropyl monocarbonate, t-hexylperoxyisopropyl monocarbonate, t-butylperoxy2-ethylhexyl monocarbonate, t-pentylperoxy2-ethylhexyl monocarbonate, and t-hexylperoxy2-ethylhexyl monocarbonate.

7. The aliphatic polyester-based resin composition as set forth in any one of claims 1 to 6, further comprising a crystal nucleating agent and/or a lubricant.

8. The aliphatic polyester-based resin composition as set forth in any one of claims 1 to 7, wherein the compatibilized biodegradable resin is obtained by melting and kneading (i) the (poly(3-hydroxyalkanoate), (ii) the biodegradable resin other than the poly(3-hydroxyalkanoate) and having a glass transition temperature of not more than -10°C, and (iii) the peroxide.

9. The aliphatic polyester-based resin composition as set forth in any one of claims 1 to 8, wherein the aliphatic polyester-based resin composition is obtained by melting and kneading the (A) and the (B).

10. A molded product comprising an aliphatic polyester-based resin composition recited in any one of claims 1 to 9.

11. A method for producing an aliphatic polyester-based resin composition, comprising the steps of:
(a) melting and kneading (i) poly(3-hydroxyalkanoate), (ii) a biodegradable resin other than the poly(3-hydroxyalkanoate) and having a glass transition temperature of not more than -10°C, and (iii) a peroxide so as to obtain a compatibilized biodegradable resin; and
(b) melting and kneading the compatibilized biodegradable resin obtained in the step (a) and the poly(3-hydroxyalkanoate) so as to obtain the aliphatic polyester-based resin composition.

12. The method as set forth in claim 11, wherein in the step (b), the compatibilized biodegradable resin is used in an amount of 5 parts by weight to 50 parts by weight with respect to 100 parts by weight of the aliphatic polyester-based resin composition.

13. The method as set forth in claim 11 or 12, wherein in the step (a), the peroxide is used in an amount of 0.01 parts by weight to 0.5 parts by weight with respect to 100 parts by weight of the aliphatic polyester-based resin composition.

14. The method as set forth in any one of claims 11 to 13, wherein in the step (a), the biodegradable resin other than the poly(3-hydroxyalkanoate) and having a glass transition temperature of not more than -10°C is at least one selected from the group consisting of polybutylene adipate terephthalate, polybutylene succinate adipate, polybutylene succinate, polybutylene succinate terephthalate, polybutylene succinate adipate terephthalate, polybutylene sebacate terephthalate, polybutylene azelate terephthalate, and polycaprolactone.

15. The method as set forth in any one of claims 11 to 14, wherein in the step (a), the peroxide is an organic peroxide having a one-minute half-life temperature of not more than 180°C.
